# EUROPÄISCHE PATENTSCHRIFT

(11) **EP 3 087 283 B1**
(45) Veröffentlichungstag und Bekanntmachung des Hinweises auf die Patenterteilung: **29.11.2017**
(21) Anmeldenummer: 14821642.7
(22) Anmeldetag: 22.12.2014
(51) Int. Cl.: F16C 33/20

(54) **GLEITLAGERWERKSTOFF UND GLEITLAGER-VERBUNDWERKSTOFF MIT ZINKSULFID UND BARIUMSULFAT**
PLAIN BEARING MATERIAL AND A PLAIN BEARING COMPOSITE MATERIAL, COMPRISING ZINC SULPHIDE AND BARIUM SULPHATE
MATÉRIAU POUR PALIER LISSE ET MATÉRIAU COMPOSITE POUR PALIER LISSE, COMPRENANT DU SULFURE DE ZINC ET DU SULFATE DE BARYUM

(30) Priorität: 27.12.2013 DE 102013227187
(43) Veröffentlichungstag der Anmeldung: 02.11.2016
(73) Patentinhaber: Federal-Mogul Wiesbaden GmbH, 65201 Wiesbaden (DE)
(72) Erfinder: ADAM, Achim, 64569 Nauheim (DE); FLEISCHHACKER, Norbert, 64653 Lorsch (DE)
(74) Vertreter: Mehler Achler
(86) Internationale Anmeldenummer: PCT/EP2014/079008
(87) Internationale Veröffentlichungsnummer: WO 2015/097158

(56) Entgegenhaltungen:
- DE-A1- 3 601 568
- DE-A1- 3 601 569

## Beschreibung

Die vorliegende Erfindung betrifft einen Gleitlagerwerkstoff auf Kunststoffbasis sowie einen Gleitlager-Verbundwerkstoff, der den entsprechenden Gleitlagerwerkstoff umfasst.

In vielen Fällen ist man bestrebt, die Gleitlager wartungsfrei auszuführen. Um eine Wartungsfreiheit erreichen zu können, müssen die Gleitlager über gute Trockenlaufeigenschaften verfügen, also auch ohne den Zusatz von flüssigen Schmierstoffen funktionstüchtig sein, wozu die verwendeten Materialien tribologisch hoch belastbar sein müssen.

Aus der DE 195 24 968 ist es bekannt, Fluorpolymere als Basismaterial zu verwenden, welche Füllstoffe beinhalten, mit denen die Trockenlaufeigenschaft der Gleitlager verbessert werden kann. Die Trockenlaufeigenschaft wird üblicherweise mittels der Verschleißrate, beispielsweise gemessen in µm/min, charakterisiert.

Gleitlagerwerkstoffe, die beispielsweise PTFE (Polytetrafluorethylen) und als Füllstoff MoS₂ (Molybdändisulfid), PTFE und Blei oder PTFE, CaF₂ (Calciumdifluorid) und ZnS (Zinksulfid) umfassen, sind seit langem bekannt und gebräuchlich. Insbesondere Gleitlagerwerkstoffe basierend auf PTFE mit den Füllstoffen MoS₂ oder hexagonales Bornitrid (h-BN)weisen eine hohe tribologische Belastbarkeit auf.

MoS₂ ist ein mineralisches Produkt, das einen hohen Aufbereitungsbedarf hat, um eine gleichbleibende Qualität zu erzeugen. Blei ist aufgrund seiner toxischen Eigenschaften als Füllstoff nicht mehr verwendbar und CaF₂ und ZnS alleine führen zu einer Verschleißrate, die nicht für alle relevanten Anwendungen ausreicht. Hexagonales BN ist zurzeit ein sehr teurer Werkstoff, so dass sein Einsatz als Füllstoff aus wirtschaftlichen Gründen nachteilig ist.

Lagerwerkstoffe mit Gleitschichten, die PTFE und Zinksulfid enthalten, sind seit einiger Zeit bekannt und gehören derzeit zu den Standardmaterialien. In der EP 1 390 629 B1 ist ein solches Material auf PTFE-Basis mit 10-25 Vol.-% ZnS beschrieben, dem C-Fasern und PPSO₂ zugemischt sind. In der DE 10 2006 048 311 A1 ist eine Zusammensetzung beschrieben, die aus einer Kunststoffmatrix mit höchstens 20% PTFE sowie Zusätzen von 5-15% Bariumsulfat oder Zinksulfid besteht.

Auch die Füllstoffkombination aus Zinksulfid und Bariumsulfat, wahlweise mit weiteren Füllstoffen, ist angedacht. Die EP 1 716 342 B1 schlägt beispielsweise einen Werkstoff mit erhöhtem Porenvolumen und einer Kunststoffmatrix aus 50 Vol.-% PVDF oder 60 Vol.-% PA, PESU oder PPS vor, in der über 5 Vol.-% PTFE und wenigstens 5 Vol.-% vorzugsweise 8 bis 12 Vol.-% Zinksulfid und/oder Bariumsulfat enthalten sind. Die Beispiele enthalten allerdings entweder nur Zinksulfid oder nur Bariumsulfat. Die EP 1 526 296 A2 beschreibt ein Material auf PEEK-, PPS- oder PA-Basis, mit einer härtenden Komponente und Kohlefasern, jedoch ohne PTFE, mit einem ZnS und/oder BaSO₄ -Anteil von 5 bis 15 Gew.-%, wobei konkret nur Zusammensetzungen mit ZnS benannt sind. Die DE 36 01 569 A1 offenbart die Zugabe von feinteiligem ZnS und BaSO₄ als Zusatz für Polymere in Kunststoff-Verbundgleitlager, wobei in einem Anteil von 5 bis 40 Vol.-% Zinksulfid, bezogen auf den Matrixwerkstoff, bis zu 5 Vol.-% BaSO₄, bezogen auf die Zinksulfid-Teilchen enthalten sein können. Die Ausführungsbeispiele sind so gewählt, dass entweder nur Zinksulfid oder nur Bariumsulfat oder Zinksulfid mit geringen Anteilen von 0,5 Vol.-% Bariumsulfat zum Einsatz kommen.

Die damit erreichten Verbesserungen der Verschleißrate reichen aber für viele Anwendungsbereiche noch nicht aus, so dass es Aufgabe der vorliegenden Erfindung ist, einen Gleitlagerwerkstoff mit Fluorpolymeren als Basismaterial mit Füllstoffen anzugeben, der eine geringere Verschleißrate als bekannte Gleitlagerwerkstoffe aufweist.

Gelöst wird die Aufgabe bei einem Gleitlagerwerkstoff der eingangs genannten Art durch eine Kombination aus 50 bis 85 Vol.-% eines Fluorpolymers als Basiswerkstoff mit Füllstoffen, die Zinksulfid und Bariumsulfat und wahlweise bis 40 Vol.-%, bezogen auf den Gesamtfüllstoffgehalt, weitere Füllstoffe umfassen, wobei das Volumenverhältnis von Zinksulfid zu Bariumsulfat zwischen 0,1 und 15,7, bevorzugt zwischen 0,1 und 10,0, weiterhin bevorzugt zwischen 0,8 und 4,88 und besonders bevorzugt zwischen 1,5 und 3,44 beträgt.

Es hat sich gezeigt, dass sich die Verschleißrate mit dem erfindungsgemäßen Aufbau im Vergleich zu Werkstoffen, die entweder nur Zinksulfid oder Bariumsulfat oder Zinksulfid mit geringen Anteilen an Bariumsulfat aufweisen, in überraschender Weise signifikant verbessern lässt. Die Verschleißrate lässt sich gegenüber den bekannten Gleitlagerwerkstoffen auf Basis von Fluorpolymeren mit Zinksulfid-Füllstoff über den gesamten beanspruchten Bereich des Volumenverhältnisses von Zinksulfid zu Bariumsulfat um einen Faktor 1,5 und bei einem Verhältnis von 0,1 bis 10 sogar um mehr als einen Faktor 2 verringern. In dem nochmals engeren Bereich bis zu einem Verhältnis von 1,5 bis 3,44 verbessert sich die Verschleißrate hiervon ausgehend nochmals um bis zu einem Faktor 2, und insgesamt sogar um einen Faktor 5. Gegenüber den bekannten Gleitlagerwerkstoffen auf Basis von Fluorpolymeren mit Bariumsulfat-Füllstoff kann die Verschleißrate bei einem Verhältnis von 0,1 bis 10 um mehr als einen Faktor 1,6 und in dem engsten Bereich um über einen Faktor 3 reduziert werden.

Vorzugsweise liegt das Zinksufid und das Bariumsulfat in Pulverform mit einer mittleren Teilchengröße von 5 µm oder weniger und insbesondere 1 µm oder weniger vor.

Hierdurch lässt sich einerseits eine weitere Reduzierung der Verschleißrate erreichen, andererseits lässt sich die Dispergierbarkeit beim Herstellen des Gleitlagerwerkstoffs verbessern, was den Herstellungsprozess vereinfacht und damit kostengünstiger macht.

Besonders bevorzugt liegen der Zinksulfid- und Bariumsulfat-Anteil in Form von Lithopone vor.

Lithopone ist ein durch gemeinsame Fällung von Zinksulfid und Bariumsulfat erzeugtes Gemisch, das mit Zusammensetzungen von 10 zu 90 bis 60 zu 40, also einem Volumenverhältnis von Zinksulfid zu Bariumsulfat von 0,11 bis 1,5, erhältlich ist.

Vorzugsweise liegen die weiteren Füllstoffe in einem Anteil von 2 bis 20 Vol.-% des Gesamtfüllstoffgehalts vor.

Die weiteren Füllstoffe werden anwendungstechnisch gewählt und weisen beispielsweise Duroplaste oder Hochtemperaturthermoplaste auf.

Durch die Duroplaste oder Hochtemperaturthermoplaste lässt sich eine weitere Reduzierung der Verschleißrate erreichen, ohne dass die Oberfläche des Gegenläufers beeinträchtigt wird. Sie erhöhen insbesondere die Tragfähigkeit der Kunststoffschicht selbst und ermöglichen längere Betriebszeiten ohne Freilegung des Sintergerüstes. Dabei haben sich als Hochtemperaturthermoplast Polyimid, Polyamidimid, PEEK (Polyetheretherketon), PPSO₂ (Polyphenylensulfon), PPS (Polyphenylensulfid), voll- oder teilaromatische Polyamide oder Polyester oder ein Gemisch hieraus als besonders geeignet erwiesen.

Die Eigenschaften lassen sich weiterhin dadurch beeinflussen, dass die weiteren Füllstoffe Festschmierstoffe aufweisen. Als Festschmierstoffe haben sich Graphit, Metallsulfide mit Schichtstruktur oder hexagonales Bornitrid als besonders wirksam erwiesen. Die Festschmierstoffe können die Verschleißrate und die Belastbarkeit insbesondere in dem Betriebszustand verbessern, in dem das Sintergerüst freigelegt ist und somit zum Gleitpartner wird.

Ferner lässt sich die Verschleißrate insbesondere bei Medienschmierung reduzieren, wenn die weiteren Füllstoffe Pigmente, insbesondere Koks oder Eisenoxid aufweisen. Pigmente beeinflussen die Benetzbarkeit und somit den Aufbau eines Schmierfilms.

Wenn die weiteren Füllstoffe Fasern wie beispielsweise Graphitkurzfasers oder Aramidfasern aufweisen, wird die mechanische Belastbarkeit, insbesondere gegenüber Scherkräften verbessert.

Auch kann es sich als vorteilhaft erweisen, wenn die weiteren Füllstoffe Hartstoffe wie beispielsweise Borcarbid oder Siliziumnitrid aufweisen. Durch die schleifende oder polierende Wirkung solcher Hartstoffe lassen sich die Verschleißraten der erfindungsgemäßen Gleitlagerwerkstoffe insbesondere dann weiter verbessern, wenn die Gegenläuferoberfläche abrasiv ist.

Eine besonders weitreichende Reduzierung der Verschleißrate, auch wenn keine Medienschmierung vorliegt, ergibt sich überraschenderweise durch Eisen(III)oxid. Vorteilhaft ist, wenn die weiteren Füllstoffe, bezogen auf die Gesamtzusammensetzung des Gleitlagerwerkstoffes, 0,5 bis 8,5 Vol.-% Eisen-(III)-oxid, bevorzugt 1 bis 5 Vol.-% Eisen-(III)-oxid und insbesondere bevorzugt 1 bis 3 Vol.-% Eisen-(III)-oxid aufweisen. Bevorzugt beträgt die mittlere Teilchengröße des Eisen-(III)-oxids 5 µm oder weniger. Hierdurch ergeben sich besonders homogene Schicht- und Oberflächeneigenschaften.

Alle vorgenannten Füllstoffe können im Umfang der genannten Höchstmenge von 40 Vol.-%, vorzugsweise von bis zu 20 Vol.-% kombiniert werden.

Das Fluorpolymer ist vorzugsweise PTFE (Polytetrafluorethylen) oder eine Mischung oder Copolymere aus PTFE mit PFA (Perfluoralkoxylalkan), MFA (Tetrafluoroethylen-perfluoromethylvinylether), FEP (Perfluor-Ethylen-Propylen), ETFE (Ethylen-Tetrafluorethylen), PCTFE (Polychlortrifluorethylen) oder PVDF (Polyvinylidenfluorid).

Nach einem weiteren Aspekt der Erfindung wird die Aufgabe auch durch einen Gleitlager-Verbundwerkstoff mit einem mechanisch stabilisierenden Gerüst gelöst, in das der vorstehend beschriebene Gleitlagerwerkstoff eingebettet ist.

Das mechanisch stabilisierende Gerüst dient der Erhöhung der Tragfähigkeit des Gleitlagerwerkstoffs, der zwar besagte hervorragende tribologische Eigenschaften aufweist aber alleine nur wenig belastbar ist.

Gemäß einer vorteilhaften Ausgestaltung des Verbundwerkstoffes wird das Gerüst durch eine Kunststoffmatrix gebildet, deren Volumenanteil, bezogen auf das Volumen des gesamten Verbundwerkstoffes, zwischen 60 und 95% und vorzugsweise zwischen 65 und 80 % beträgt.

In einer bevorzugten Weiterbildung des erfindungsgemäßen Verbundwerkstoffes umfasst die Kunststoffmatrix Duro- oder Thermoplasten wie PPS (Polyphenylensulfid), PPA (Polyphthalamid), PVDF (Polyvinylidenfluorid), PSU (Polysulfon), PESU (Polyethersulfon), PEI (Polyetherimid), PEEK (Polyetheretherketon), PAI (Polyamidimid) oder PI (Polyimid) oder ein Gemisch hieraus.

Eine andere vorteilhafte Ausgestaltung des Verbundwerkstoffes sieht vor, dass das Gerüst durch ein Metallgewebe oder durch ein Streckmetall gebildet wird.

Besonders bevorzugt wird das Gerüst durch eine Sintermatrix gebildet, in die der Gleitlagerwerkstoff imprägniert ist.

Das Imprägnieren erfolgt bekanntermaßen dadurch, dass die in der Regel offen poröse Sintermatrix unter Druck mit einer wässrigen Suspension des Gleitlagerwerkstoffes beschichtet wird, wodurch die Paste die Poren der Matrix auffüllt und je nach Menge eine geschlossene Deckschicht bildet. Der so erzeugte Werkstoff wird anschließend einer Wärmebehandlung bei 350 bis 400°C unterzogen, bei der der Gleitlagerwerkstoff gesintert wird.

Besonders bevorzugt weist die Sintermatrix ein Porenvolumen von 15 bis 50 % aufweist, wobei die Poren mit dem Gleitlagerwerkstoff vollständig ausgefüllt sind.

Weiterhin bevorzugt ist es, wenn die Sintermatrix mit einer Deckschicht aus dem Gleitlagerwerkstoff überzogen ist, die eine Dicke von bis zu 150 µm, vorzugsweise von 5 bis 40 µm aufweist.

Die Sintermatrix ist vorzugsweise eine metallische Matrix und besteht besonders bevorzugt aus einer Bronze mit 5 bis 15 Gew.-% Zinn.

Bei den Verbundwerkstoffen auf PTFE-Sinterbronze-Basis wird die Leitungsfähigkeit so weit verbessert, dass unter schmiermittelfreien Bedingungen pv-Werte im mittleren Last- und Geschwindigkeitsbereich von bis zu 4 MPa m/s erreicht werden können, wenn man eine maximale Verschleißrate von 5 µm/km als Grenzwert zu Grunde legt. Unter pv-Wert wird allgemein der Wert des maximal zulässigen Produktes aus Belastung und Gleitgeschwindigkeit verstanden, bis zu dem die festgelegte Verschleißrate, hier also 5 µm/km, noch nicht überschritten wird. Gleichzeitig weisen diese Werkstoffe günstige Reibwerte im Trockenlauf auf.

Nach einem weiteren Aspekt der Erfindung wird die Aufgabe auch durch einen Gleitlager-Schichtverbundwerkstoff mit einem Metallrücken gelöst, auf dem ein Verbundwerkstoff der vorstehend beschrieben Art angeordnet ist.

Das sogenannte Stützmetall verleiht dem Schichtverbundwerkstoff eine erhöhte Festigkeit.

Sowohl das Metallgewebe bzw. Streckmetall als auch die Kunststoffmatrix oder die Sinterbronze können zur Verfestigung des Lagers auf einem solchen Metallrücken angeordnet werden.

Grundsätzlich ist die Erfindung aber auch in Ausgestaltung eines Massivkunststoff-Gleitelements, oder verschiedener Zwei- und Mehrschicht-Verbundwerkstoffe, beispielsweise mit massiver Lagermetallschicht als Substrat, realisierbar.

Die Erfindung wird anhand von bevorzugten Ausführungsbeispielen unter Bezugnahme auf die anhängenden Zeichnungen im Detail beschrieben. Es zeigen
- Figur 1: eine Prinzipskizze eines ersten Ausführungsbeispiels des erfindungsgemäßen Gleitlager-Schichtverbundwerkstoffes,
- Figur 2: eine Prinzipskizze eines zweiten Ausführungsbeispiels des erfindungsgemäßen Gleitlager-Schichtverbundwerkstoffs,
- Figur 3: ein Diagramm, welches die Abhängigkeit der Verschleißrate vom Verhältnis zwischen Zinksulfid und Bariumsulfat zeigt, und
- Figur 4: ein Diagramm, welches die Abhängigkeit der Verschleißrate vom Anteil des Eisen-(III)-oxids als weiterer Füllstoff zeigt.

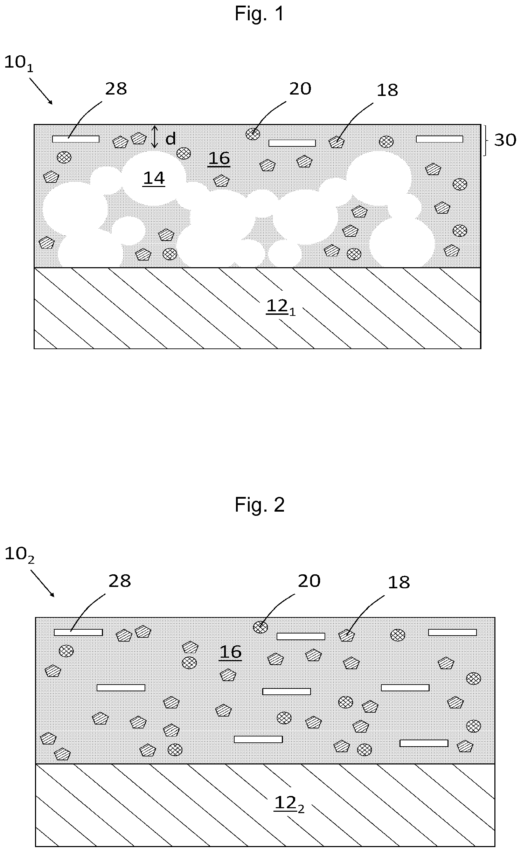

Figur 1 zeigt ein erstes Ausführungsbeispiel eines erfindungsgemäßen Gleitlager-Schichtverbundwerkstoffs 10₁, welcher einen Metallrücken 12₁, ein auf dem Metallrücken 12₁ angeordnetes mechanisch stabilisierendes Gerüst in Form einer porösen Sinterschicht 14, beispielsweise aus einer Bronze, und einen Gleitlagerwerkstoff 16, der mit der porösen Schicht 14 haftend verbunden ist, umfasst. Die Sintermatrix ist mit einer geschlossenen Deckschicht 30 aus dem Gleitlagerwerkstoff überzogen. Anders gesagt ist die von der Sintermatrix 14 definierte Schichthöhe geringer als die Höhe der von dem Gleitlagerwerkstoff 16 definierten Schicht. Die Dicke d der Deckschicht 30 beträgt bis zu 150 µm und liegt vorzugsweise im Bereich von 5 bis 40 µm. Die Deckschicht wird nach einer gewissen Einlaufzeit verschlissen sein, so dass anschließend die darunter liegende Gleitschicht mit dem tragenden Sintergerüst 14 mit dem Gegenläufer zum Einsatz kommt. Der Gleitlager-Schichtverbundwerkstoff 16 weist einen Volumenanteil von 50 bis 85% eines Fluorpolymers sowie Zinksulfid 18 und Bariumsulfat 20 als Füllstoffe auf. Der Gleitlager-Schichtverbundwerkstoff 16 weist ferner einen weiteren Füllstoff 28 auf.

In Figur 2 ist ein zweites Ausführungsbeispiel eines Gleitlager-Schichtverbundwerkstoffes 10₂ dargestellt, der einen Metallrücken 12₂ und eine direkt mit dem Metallrücken 12₂ haftend verbundene Gleitschicht umfasst, wobei die Gleitschicht vom Gleitlagerwerkstoff 16 gebildet wird. Der Gleitlagerwerkstoff 16 ist ansonsten genauso aufgebaut wie im ersten Ausführungsbeispiel.

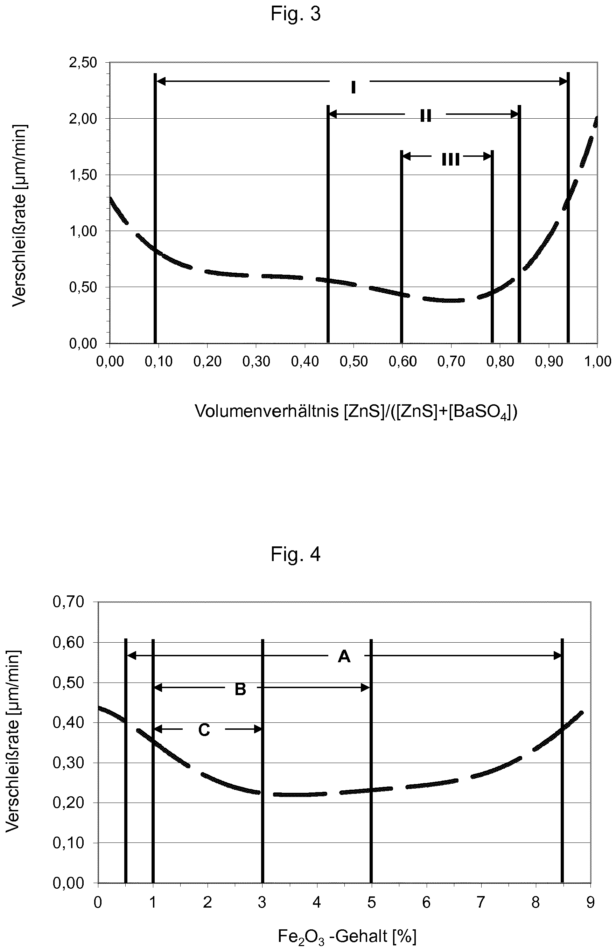

Figur 3 zeigt die Verschleißrate von Gleitlagerwerkstoffen auf PTFE-Basis in Abhängigkeit von dem Verhältnis der zugegebenen Füllstoffe Zinksulfid zu Bariumsulfat. Der ZnS-Volumengehalt ist normiert auf die Summe der Volumina beider Füllstoffe angegeben.

Um die Verschleißfestigkeit zu untersuchen, wurden die Zugabe von ZnS und BaSO₄ von jeweils 0 % bis 100% der Gesamtfüllstoffmenge variiert. Weitere Füllstoffe sind nicht vorhanden. Der kumulierte Volumenanteil von Zinksulfid und Bariumsulfat am Gesamtvolumen des Gleitlagerwerkstoffs beträgt konstant 30%. Proben dieser Gleitlagerwerkstoffe wurden jeweils zu dreischichtigen Gleitlager-Schichtverbundwerkstoffen verarbeitet, die aus einem 1,25 mm dicken Stahlrücken, einer 0,2 mm bis 0,23 mm dicken Sinter-Bronze und darüber einer 0,02 mm bis 0,05 mm dicken Deckschicht aus dem Gleitlagerwerkstoff bestanden. An diesen Proben wurde jeweils mittels eines Stift-Walze-Tribometers mit Prüfkörpern von 78 mm² die Verschleißraten bei 0,52 m/s und einer Belastung von 17,5 MPa gemessen und verglichen.

Im Bereich I des Diagramms der Figur 3 beträgt das Volumenverhältnis von Zinksulfid zu Bariumsulfat zwischen 0,1 und 15,7 und der auf das Summenvolumen beider Füllstoffe normierte ZnS-Gehalt zwischen 0,09 und etwa 0,94. Außerhalb dieses Bereiches weist die Verschleißrate auf beiden Seiten jeweils den signifikantesten Anstieg auf, so dass die Verschleißrate in diesem Bereich durchweg weniger als 1,3 µm/min beträgt und im direkten Vergleich mit den Zusammensetzungen mit jeweils reinem Zinksulfid oder Bariumsulfat schon um ca. 33% geringer ausfällt.

Im Bereich II, der einen Ausschnitt des Bereiches I darstellt und ein Volumenverhältnis von Zinksulfid zu Bariumsulfat zwischen 0,8 und 4,88 umfasst, was einem normierten ZnS-Anteil von etwa 0,44 bis 0,83 entspricht, beträgt die Verschleißrate des Gleitlagerwerkstoff 0,6 µm/min oder weniger und damit schon nur noch etwa die Hälfte der Verschleißrate einer Zusammensetzungen mit reinem Zinksulfid.

Während die Verschleißrate bei einem variierenden Verhältnis zwischen 0,2 und 0,4 kaum variiert, kann bei weiter steigendem Zinksulfid-Anteil eine nochmalige Abnahme der Verschleißrate festgestellt werden. Im Bereich III, in dem das Volumenverhältnis von Zinksulfid zu Bariumsulfat zwischen 1,5 und 3,44, der normierte ZnS-Volumenanteil zwischen 0,6 und 0,77 beträgt, liegt deshalb auch das Minimum der Verschleißrate des erfindungsgemäßen Gleitlagerwerkstoffes. Sie beträgt in dem gesamten Bereich III unter 0,5 µm/min und im Minimum um ca. 0,4 µm/min, was gegenüber den bekannten Gleitlagern eine deutliche Reduzierung um einen Faktor 3 bis 5 darstellt.

In Figur 4 ist die Abhängigkeit der Verschleißrate vom Gehalt des Eisen-(III)-oxids als weiterer Füllstoff 28 dargestellt, wobei der Volumenanteil des Fluorpolymers, in diesem Fall PTFE, am Gleitlagerwerkstoff 70% und das Verhältnis von Zinksulfid zu Bariumsulfat 3,0 beträgt. Dies entspricht einem auf das Gesamtvolumen von Zinksulfid und Bariumsulfat normierten Zinksulfidanteil von 0,75 an der oberen Grenze des Bereichs III in der Grafik der Figur 3. Folglich ist ohne Zusatz von Eisen-(III)-oxid eine Verschleißrate von etwa 0,43 µm/min zu erwarten, was der Startpunkt der Kurve in dem Diagramm der Figur 4 auch bestätigt.

Wie Figur 4 weiterhin zeigt, lässt sich die Verschleißrate mit der Zugabe von Eisen-(III)-oxid (Fe₂O₃) weiter verringern. Der Volumenanteil des Fe₂O₃ wurde in den Experimenten bis 9,0 Vol.-%, bezogen auf die Gesamtzusammensetzung des Gleitlagerwerkstoffes, gesteigert, wobei eine signifikante Absenkung der Verschleißrate bereits in einem Bereich A von 0,5 bis 8,5 Vol.-% festellbar wurde.

Bevorzugt ist der Bereich B von 1 bis 5 Vol.-% Fe₂O₃, wo die Verschleißrate für die getesteten Proben auf einen Minimalwert von 0,22 µm/min absinkt und damit um einen Faktor von bis zu 6 bzw. 9 gegenüber den Zusammensetzungen mit reinem Zinksulfid bzw. Bariumsulfat reduziert ist. Jedoch ist zu berücksichtigen, dass das Fe₂O₃ schleifend auf die Gegenlauffläche einwirkt. Dies ist zwar während des Einlaufens in geringem Maße gewünscht, jedoch nicht dauerhaft. Deshalb ist der Bereich B nicht etwa zentriert um das Minimum bei etwa 3,5 Vol.-% Fe₂O₃ angeordnet sondern bereits bei 5 Vol.-% nach oben abgeschnitten.

Aus demselben Grund schließt der Bereich C von 1 bis 3 Vol.-% Fe₂O₃ nicht einmal mehr das Minimum ein, sondern endet bei einem Fe₂O₃ -Gehalt, bei dem die Verschleißrate erst etwa 0,23 µm/min beträgt.

Die Ergebnisse der Verschleißtests sind für ausgewählte erfindungsgemäße Zusammensetzungen in Tabelle 1 zusammengefasst und Vergleichswerkstoffen gegenübergestellt. Die Zusammensetzungen des erfindungsgemäßen Gleitlagerwerkstoffes umfassen wie zuvor PTFE, Zinksulfid und BaSO₄ sowie außerdem weitere Füllstoffe in den in der Tabelle angegebenen Bereichen. Der Aufbau des Gleitlager-Schichtverbundwerkstoffs ist mit dem zuvor beschriebenen identisch. Das gilt auch für die Vergleichswerkstoffe. Schließlich sind auch die Versuchsbedingungen für die Bestimmung der Verschleißrate ("wear rate") mit den vorstehend beschriebenen identisch. Außerdem wurde der Reibwert ("friction") bestimmt.

**Tabelle 1**

| Beispiele | PTFE | BaSO4 | ZnS | Lithopone (32% ZnS) | Fe2O3 | PEEK | PPS | PPTA |
|---|---|---|---|---|---|---|---|---|
| | Vol-% | Vol-% | Vol-% | Vol-% | Vol-% | Vol-% | Vol-% | Vol-% |
| Comp A | 70 | 30 | | | | | | |
| Comp B | 70 | | 30 | | | | | |
| Comp C | 70 | 28 | 2 | | | | | |
| Comp D | 70 | 1 | 29 | | | | | |
| Comp E | 55 | 2 | 43 | | | | | |
| Comp F | 85 | 14 | 1 | | | | | |
| 1 | 70 | 9 | 21 | | | | | |
| 2 | 55 | 13,5 | 31,5 | | | | | |
| 3 | 85 | 7,5 | 7,5 | | | | | |
| 4 | 65 | | | 35 | | | | |
| 5 | 70 | 8,7 | 20,3 | | 1 | | | |
| 6 | 70 | 8,4 | 19,6 | | 2 | | | |
| 7 | 70 | 19,6 | 8,4 | | 2 | | | |
| 8 | 70 | 8,1 | 18,9 | | 3 | | | |
| 9 | 65 | | | 32 | 3 | | | |
| 10 | 75 | 10 | 10 | | | 5 | | |
| 11 | 75 | 12,25 | 5,25 | | | | 7,5 | |
| 12 | 75 | 10 | 10 | | | | | 5 |
| 13 | 75 | 15,75 | 6,75 | | | | | |
| 14 | 70 | 11,25 | 11,25 | | 2,5 | 5 | | |
| 15 | 70 | 14 | 6 | | 2,5 | | 7,5 | |
| 16 | 70 | | | 25 | | | | 5 |
| 17 | 65 | | | 27,5 | 2,5 | | | |
| 18 | 80 | 3,9 | 9,1 | | 2 | | | |
| 19 | 70 | 11,25 | 11,25 | | | | | |
| 20 | 75 | | | 20 | | | | |
| 21 | 65 | 20,3 | 8,7 | | 3,5 | | | |
| 22 | 75 | 13,65 | 5,85 | | 2 | | | |
| 23 | 70 | | | 25 | 2 | | | |
| 24 | 70 | 6,6 | 15,4 | | | | | |
| 25 | 75 | | | 15 | | | | |

| Beispiele | PPSO 2 | MoS2 | h-BN | C-Faser | AramidFaser | Si3N4 | Verschleißrate | Reibung |
|---|---|---|---|---|---|---|---|---|
| | Vol-% | Vol-% | Vol-% | Vol-% | Vol-% | Vol-% | µm/min | |
| Comp A | | | | | | | 1,43 | 0,260 |
| Comp B | | | | | | | 1,91 | 0,230 |
| Comp C | | | | | | | 0,91 | 0,255 |
| Comp D | | | | | | | 1,44 | 0,230 |
| Comp E | | | | | | | 1,68 | 0,220 |
| Comp F | | | | | | | 2,01 | 0,240 |
| 1 | | | | | | | 0,39 | 0,225 |
| 2 | | | | | | | 0,78 | 0,220 |
| 3 | | | | | | | 0,92 | 0,230 |
| 4 | | | | | | | 0,59 | 0,240 |
| 5 | | | | | | | 0,33 | 0,230 |
| 6 | | | | | | | 0,25 | 0,230 |
| 7 | | | | | | | 0,35 | 0,250 |
| 8 | | | | | | | 0,25 | 0,235 |
| 9 | | | | | | | 0,32 | 0,230 |
| 10 | | | | | | | 0,37 | 0,240 |
| 11 | | | | | | | 0,53 | 0,240 |
| 12 | | | | | | | 0,38 | 0,245 |
| 13 | 2,5 | | | | | | 0,65 | 0,235 |
| 14 | | | | | | | 0,24 | 0,240 |
| 15 | | | | | | | 0,27 | 0,250 |
| 16 | | | | | | | 0,53 | 0,230 |
| 17 | 5 | | | | | | 0,28 | 0,230 |
| 18 | | 5 | | | | | 0,49 | 0,215 |
| 19 | | | 7,5 | | | | 0,4 | 0,210 |
| 20 | | | 5 | | | | 0,71 | 0,205 |
| 21 | | | | 2,5 | | | 0,23 | 0,265 |
| 22 | | | | | 3,5 | | 0,25 | 0,240 |
| 23 | | | | | 3 | | 0,27 | 0,230 |
| 24 | | 4 | | | | 4 | 0,47 | 0,245 |
| 25 | | | 5 | | | 5 | 0,55 | 0,240 |

Zunächst sei darauf hingewiesen, dass die Vergleichswerkstoffe ("Comp A" bis "Comp F") und die erfindungsgemäßen Werkstoffe ("1" bis "25") hinsichtlich der Reibwerte keine signifikanten Unterschiede aufweisen. In einzelnen Beispielfällen, wie Nummer 18, 19 und 20, kann zwar eine Verringerung des Reibwerts festgestellt werden. Diese wird jedoch auf die Zugabe von Festschmierstoffen zurückgeführt.

Dem gegenüber bestätigen bereits die Beispiele 1 bis 3 aus der Tabelle, dass die Verschleißrate im beanspruchten Bereich des Verhältnisses von Zinksulfid zu Bariumsulfat signifikant gegenüber der bei den Vergleichsbeispielen erzielbaren Verschleißrate zurückgeht. Dies gilt erkennbar auch für Zusammensetzungen mit insgesamt höherem Füllstoffanteil, wie der Vergleich der Beispiele 2 und 3 mit dem Vergleichsbeispiel E zeigt. Daran ändert auch die Zugabe weiterer Füllstoffe (außer Eisen-(III)-oxid) nichts, wie der Vergleich der Beispiele 1 bis 3 mit den Beispielen 10 bis 13 zeigt.

Eine Verringerung der Verschleißrate ist indes feststellbar, wenn der Füllstoff Fe₂O₃ hinzukommt, wie die Beispiele 5 bis 8 ohne Fe₂O₃ im Vergleich mit den Beispielen 1 bis 3 mit Fe₂O₃ oder die auch alle Beispiele mit weiteren Füllstoffen mal in Kombination mit und mal ohne Fe₂O₃ zeigen.

Darüber hinaus wurde die Wirksamkeit von Lithopone mit 32 Vol.-% ZnS und 68 Vol.-% BaSO₄ geprüft. Entsprechende Ergebnisse vom Stift-Walze Prüfstand sind in der Tabelle 1 als Beispiele 4, 9, 16, 17, 20, 23, 25 dargestellt. Es wird deutlich, dass zur Herbeiführung des erfindungsgemäßen Effekts auch diese besonders homogenen Mischungen verwendbar sind.

Die Beispiele 10-17 verdeutlichen den Einfluss von Zusätzen von Hochtemperatur-Thermoplasten als weitere Füllstoffe, Beispiele 18-20 den Einfluss von Festschmierstoffen und Beispiele 21-23 den Einfluss von Fasern. In den Bespielen 24 und 25 ist als Hartstoff Siliziumnitrid (Si₃N₄) zugegeben worden, wobei zusätzlich auch ein Festschmierstoff verwendet wurde, um negativen Auswirkungen auf den Reibwert und einer Verriefung der Gegenlauffläche entgegenzuwirken.

Wie bereits erläutert, kann die Mischung aus Fluorthermoplasten, BaSO₄, ZnS und gegebenenfalls Fe₂O₃ und weiteren Füllstoffen auch in eine Matrix aus Thermoplastwerkstoffen eingebettet sein, deren Volumenanteil, bezogen auf das Volumen des gesamten Verbundwerkstoffes, zwischen 60 und 95% und vorzugsweise zwischen 65 und 80% beträgt. Diese können dann sowohl als Massivkunststoff als auch als Schichtverbundwerkstoff auf einem Metallträger, beipielsweise Stahl oder Stahl mit einer porösen Sinterschicht aus Bronze zu Gleitelementen verarbeitet werden.

Beispielhafte Zusammensetzungen hierfür in Volumen-% sind:
70% PEEK, 21% PTFE, 2,7% ZnS, 6,3% BaSO₄
90% PEEK, 8,5% PTFE, 0,75% ZnS, 0,75% BaSO₄
80% PEEK, 10,6% PTFE, 2,7% ZnS, 6,4% BaSO₄, 0,4% Fe₂O₃
65% PESU, 19,2% PTFE, 4,6% ZnS, 11,2% BaSO₄
80% PESU, 14% PTFE, 1,8% ZnS, 4,2% BaSO₄
70% PESU, 25,2% PTFE, 2,25% ZnS, 2,25% BaSO₄, 0,3% Fe₂O₃
70% PPS, 16,5% PTFE, 3,9% ZnS, 9,6% BaSO₄
85% PPS, 10,5% PTFE, 1,35% ZnS, 3,15% BaSO₄
60% PPS, 26,8% PTFE, 3,6% ZnS, 8,4% BaSO₄, 1,2% Fe₂O₃
80% PPA, 17% PTFE, 1,5% ZnS, 1,5% BaSO₄
60% PPA, 22% PTFE, 5,2% ZnS, 12,8% BaSO₄
70% PPA, 20,1% PTFE, 2,7% ZnS, 6,3% BaSO₄, 0,9% Fe₂O₃

Im Folgenden wird die Herstellung eines Gleitlagerwerkstoffs beispielhaft erläutert: Die Herstellung kann über eine PTFE-Dispersion erfolgen, welcher Zinksulfid zu Bariumsulfat und wahlweise ein weiterer Füllstoff so beigemischt werden, dass sie bei der nachfolgend herbeigeführten Koagulation in homogener Verteilung mitgerissen werden. Hierbei entsteht eine pastöse Masse, die die für den nachfolgenden Beschichtungsprozess erforderlichen Eigenschaften aufweist, wobei vor der Beschichtung noch die ausgetretene Flüssigkeit entfernt werden muss.

Beispielsweise werden 12 L Wasser, 25 g Natriumlaurylsulfat, 6,3 kg Zinksulfid, und 3,0 kg Bariumsulfat 20 min lang kräftig gerührt und dann 36 kg einer 30 %-igen PTFE-Dispersion zugegeben. Nach 2 min weiteren Rührens werden 100 g einer 20 %-igen Aluminiumnitratlösung und nach erfolgter Koagulation 1 L Toluol ergänzt und 3 min weitergerührt.

### Bezugszeichenliste

- 10₁, 10₂: Gleitlager-Schichtverbundwerkstoff
- 12: Metallrücken
- 14: poröse Schicht
- 16: Gleitlagerwerkstoff
- 18: Zinksulfid (ZnS)
- 20: Bariumsulfat (BaSo₄)
- 28: weiterer Füllstoff
- 30: Gleitschicht

## Patentansprüche

1. Gleitlagerwerkstoff (16) mit 50 bis 85 Vol.-% eines Fluorpolymers als Basiswerkstoff und mit Füllstoffen, die Zinksulfid (18) und Bariumsulfat (20) und wahlweise bis 40 Vol.-%, bezogen auf den Gesamtfüllstoffgehalt, weitere Füllstoffe (28) umfassen,
wobei das Volumenverhältnis von Zinksulfid (18) zu Bariumsulfat (20) zwischen 0,1 und 15,7, bevorzugt zwischen 0,8 und 4,88 und besonders bevorzugt zwischen 1,5 und 3,44 beträgt.

2. Gleitlagerwerkstoff (16) nach Anspruch 1,
**dadurch gekennzeichnet, dass** das Zinksulfid (18) und das Bariumsulfat (20) in Pulverform mit einer mittleren Teilchengröße von 5 µm oder weniger und insbesondere 1 µm oder weniger vorliegen.

3. Gleitlagerwerkstoff (16) nach Anspruch 1 oder 2,
**dadurch gekennzeichnet, dass** der Zinksulfid- und Bariumsulfat-Anteil in Form von Lithopone vorliegt.

4. Gleitlagerwerkstoff (16) nach einem der vorherigen Ansprüche,
**dadurch gekennzeichnet, dass** die weiteren Füllstoffe (28) in einem Anteil von 2 bis 20 Vol.-% des Gesamtfüllstoffgehalts vorliegen.

5. Gleitlagerwerkstoff (16) nach einem der vorstehenden Ansprüche,
**dadurch gekennzeichnet, dass** die weiteren Füllstoffe (28) ausgewählt sind aus einer Gruppe umfassend Duroplaste; Hochtemperaturthermoplaste wie Polyimid, Polyamidimid, PEEK, PPSO₂, PPS, voll- oder teilaromatische Polyamide oder Polyester oder ein Gemisch hieraus; Festschmierstoffe wie Graphit, Metallsulfid oder hexagonales Bornitrid; Pigmente wie Koks oder Eisenoxid; Faserstoffe wie Graphitkurzfasern oder Aramidfasern; und Hartstoffe wie Borcarbid oder Siliziumnitrid.

6. Gleitlagerwerkstoff (16) nacheinem der vorstehenden Ansprüche,
**dadurch gekennzeichnet, dass** die weiteren Füllstoffe (28), bezogen auf die Gesamtzusammensetzung des Gleitlagerwerkstoffes, 0,5 bis 8,5 Vol.-%, bevorzugt 1 bis 5 Vol.-% und insbesondere bevorzugt 1 bis 3 Vol.-% Eisen-(III)-oxid umfassen.

7. Gleitlagerwerkstoff (16) nach einem der vorherigen Ansprüche,
**dadurch gekennzeichnet, dass** der Fluorpolymer PTFE oder eine Mischung aus PTFE mit PFA, MFA, FEP, ETFE, PCTFE oder PVDF ist.

8. Gleitlager-Verbundwerkstoff
**gekennzeichnet durch** ein mechanisch stabilisierendes Gerüst, in das der Gleitlagerwerkstoff (16) nach einem der vorherigen Ansprüche eingebettet ist.

9. Gleitlager-Verbundwerkstoff nach Anspruch 8,
**dadurch gekennzeichnet, dass** das Gerüst durch eine Kunstoffmatrix gebildet wird, deren Volumenanteil, bezogen auf das Volumen des gesamten Verbundwerkstoffes, zwischen 60 und 95 % und vorzugsweise zwischen 65 und 80 % beträgt.

10. Gleitlager-Verbundwerkstoff nach Anspruch 9,
**dadurch gekennzeichnet, dass** die Kunststoffmatrix einen oder mehrere Duro- oder Thermoplasten ausgewählt aus der Gruppe bestehend aus PPS, PPA, PVDF, PSU, PESU, PEI, PEEK, PAI oder PI aufweist.

11. Gleitlager-Verbundwerkstoff nach Anspruch 8,
**dadurch gekennzeichnet, dass** das Gerüst durch ein Metallgewebe oder durch ein Streckmetall gebildet wird.

12. Gleitlager-Verbundwerkstoff nach Anspruch 8,
**dadurch gekennzeichnet, dass** das Gerüst durch eine Sintermatrix gebildet wird, in die der Gleitlagerwerkstoff imprägniert ist.

13. Gleitlager-Verbundwerkstoff nach Anspruch 12,
**dadurch gekennzeichnet, dass** die Sintermatrix ein Porenvolumen von 15 bis 50 % aufweist, wobei die Poren mit dem Gleitlagerwerkstoff ausgefüllt sind.

14. Gleitlager-Verbundwerkstoff nach Anspruch 13,
**dadurch gekennzeichnet, dass** die Sintermatrix mit einer Deckschicht aus dem Gleitlagerwerkstoff überzogen ist, die eine Dicke von bis zu 150 µm, vorzugsweise von 5 bis 40 µm aufweist.

15. Gleitlager-Verbundwerkstoff nach einem der Ansprüche 12 bis 14,
**dadurch gekennzeichnet, dass** die Sintermatrix aus einer Bronze mit 5 bis 15 Gew.-% Zinn besteht.

16. Gleitlager-Schichtverbundwerkstoff mit einem Metallrücken, auf dem ein Gleitlager-Verbundwerkstoff nach einem der Ansprüche 8 bis 15 angeordnet ist.

## Claims

1. Plain bearing material (16) having from 50 to 85% by volume of a fluoropolymer as a base material and having filling materials which comprise zinc sulphide (18) and barium sulphate (20) and optionally up to 40% by volume, with respect to the total filling material content, of additional filling materials (28),
wherein the volume ratio of zinc sulphide (18) to barium sulphate (20) is between 0.1 and 15.7, preferably between 0.8 and 4.88 and in a particularly preferred manner between 1.5 and 3.44.

2. Plain bearing material (16) according to claim 1, **characterised in that** the zinc sulphide (18) and the barium sulphate (20) are present in powder form with a mean particle size of 5 µm or less and in particular 1 µm or less.

3. Plain bearing material (16) according to claim 1 or 2, **characterised in that** the zinc sulphide and barium sulphate proportion is in the form of lithopone.

4. Plain bearing material (16) according to any one of the preceding claims, **characterised in that** the additional filling materials (28) are present in a proportion of from 2 to 20% by volume of the total filling material content.

5. Plain bearing material (16) according to any one of the preceding claims, **characterised in that** the additional filling materials (28) are selected from a group comprising thermosetting plastics materials, high-temperature thermoplastic materials such as polyimide, polyamide-imide, PEEK, PPSO₂, PPS, fully or partially aromatic polyamides or polyesters or an admixture thereof; solid lubricants such as graphite, metal sulphide or hexagonal boron nitride; pigments such as coke or iron oxide; fibre materials such as graphite short fibres or aramide fibres; and mechanically resistant materials such as boron carbide or silicon nitride.

6. Plain bearing material (16) according to any one of the preceding claims, **characterised in that** the additional filling materials (28), with respect to the total composition of the plain bearing material, comprise from 0.5 to 8.5% by volume, preferably from 1 to 5% by volume and in a particularly preferred manner from 1 to 3% by volume of iron (III) oxide.

7. Plain bearing material (16) according to any one of the preceding claims, **characterised in that** the fluoropolymer is PTFE or a mixture of PTFE with PFA, MFA, FEP, ETFE, PCTFE or PVDF.

8. Plain bearing composite material,
**characterised by** a mechanically stabilising framework, in which the plain bearing material (16) is embedded according to any one of the preceding claims.

9. Plain bearing composite material according to claim 8, **characterised in that** the framework is formed by means of a plastics material matrix whose volume proportion, with respect to the volume of the total composite material, is between 60 and 95% and preferably between 65 and 80%.

10. Plain bearing composite material according to claim 9, **characterised in that** the plastics material matrix has one or more thermosetting plastics materials or thermoplastics selected from the group comprising PPS, PPA, PVDF, PSU, PESU, PEI, PEEK, PAI or PI.

11. Plain bearing composite material according to claim 8,
**characterised in that** the framework is formed by means of a woven metal fabric or by means of an expanded metal.

12. Plain bearing composite material according to claim 8,
**characterised in that** the framework is formed by means of a sinter matrix in which the plain bearing material is impregnated.

13. Plain bearing composite material according to claim 12,
**characterised in that** the sinter matrix has a pore volume of from 15 to 50%, wherein the pores are filled with the plain bearing material.

14. Plain bearing composite material according to claim 13,
**characterised in that** the sinter matrix is covered with a covering layer of the plain bearing material which has a thickness of up to 150 µm, preferably from 5 to 40 µm.

15. Plain bearing composite material according to any one of claims 12 to 14,
**characterised in that** the sinter matrix comprises a bronze with from 5 to 15% by weight of tin.

16. Plain bearing layered composite material having a metal backing on which a plain bearing composite material according to any one of claims 8 to 15 is arranged.

## Revendications

1. Matériau pour palier lisse (16) avec 50 à 85% en vol. d'un fluoropolymère comme matériau de base et avec des charges qui comprennent du sulfure de zinc (18) et du sulfate de baryum (20) et au choix, jusqu'à 40 % en vol., par rapport à la teneur en charges totale, d'autres charges (28), dans lequel le rapport volumique de sulfure de zinc (18) sur sulfate de baryum (20) se situe entre 0,1 et 15,7, de préférence entre 0,8 et 4,88 et de manière particulièrement préférée entre 1,5 et 3,44.

2. Matériau pour palier lisse (16) selon la revendication 1, **caractérisé en ce que** le sulfure de zinc (18) et le sulfate de baryum (20) sont présents sous forme de poudre avec une taille particulaire moyenne de 5 µm ou moins et notamment de 1 µm ou moins.

3. Matériau pour palier lisse (16) selon la revendication 1 ou 2, **caractérisé en ce que** la proportion de sulfure de zinc et de sulfate de baryum est présente sous forme de lithopone.

4. Matériau pour palier lisse (16) selon une des revendications précédentes, **caractérisé en ce que** les autres charges (28) sont présentes en une proportion de 2 à 20 % en vol. de la teneur en charges totale.

5. Matériau pour palier lisse (16) selon une des revendications précédentes, **caractérisé en ce que** les autres charges (28) sont sélectionnées parmi un groupe comprenant des duroplastes ; des thermoplastes à haute température comme le polyimide, polyamide-imide, PEEK, PPSO₂, PPS, des polyamides ou polyesters entièrement ou partiellement aromatiques ou un mélange de ceux-ci ; des lubrifiants solides comme le graphite, un sulfure métallique ou un boronitrure hexagonal ; des pigments comme le coke ou l'oxyde de fer ; des matières fibreuses comme des fibres courtes de graphite ou des fibres d'aramide ; et des substances dures comme le carbure de bore ou le nitrure de silicium.

6. Matériau pour palier lisse (16) selon une des revendications précédentes, **caractérisé en ce que** les autres charges (28) comprennent, par rapport à la composition globale du matériau pour palier lisse, 0,5 à 8,5 % en vol., de préférence 1 à 5 % en vol. et de manière particulièrement préférée 1 à 3 % en vol. d'oxyde de fer(III).

7. Matériau pour palier lisse (16) selon une des revendications précédentes, **caractérisé en ce que** le fluoropolymère est le PTFE ou un mélange de PTFE avec PFA, MFA, FEP, ETFE, PCTFE ou PVDF.

8. Matériau composite pour palier lisse, **caractérisé par** un squelette mécaniquement stabilisant dans lequel le matériau pour palier lisse (16) selon une des revendications précédentes est incorporé.

9. Matériau composite pour palier lisse selon la revendication 8, **caractérisé en ce que** le squelette est formé par une matrice en matière plastique dont la proportion volumique, par rapport au volume du matériau composite global, se situe entre 60 et 95 % et de préférence entre 65 et 80 %.

10. Matériau composite pour palier lisse selon la revendication 9, **caractérisé en ce que** la matrice plastique présente un ou plusieurs duroplastes ou thermoplastes sélectionnés parmi le groupe constitué de PPS, PPA, PVDF, PSU, PESU, PEI, PEEK, PAI ou PI.

11. Matériau composite pour palier lisse selon la revendication 8, **caractérisé en ce que** le squelette est formé par un tissu métallique ou par un métal étiré.

12. Matériau composite pour palier lisse selon la revendication 8, **caractérisé en ce que** le squelette est formé par une matrice frittée dans laquelle le matériau pour palier lisse est imprégné.

13. Matériau composite pour palier lisse selon la revendication 12, **caractérisé en ce que** la matrice frittée présente un volume de pores de 15 à 50 %, dans lequel les pores sont remplis du matériau pour palier lisse.

14. Matériau composite pour palier lisse selon la revendication 13, **caractérisé en ce que** la matrice frittée est recouverte d'une couche de recouvrement constituée du matériau pour palier lisse qui présente une épaisseur allant jusqu'à 150 µm, de préférence de 5 à 40 µm.

15. Matériau composite pour palier lisse selon une des revendications 12 à 14, **caractérisé en ce que** la matrice frittée se compose d'un bronze avec 5 à 15 % en poids d'étain.

16. Matériau composite de couche pour palier lisse avec un dos métallique sur lequel un matériau composite pour palier lisse selon une des revendications 8 à 15 est disposé.
